# EUROPÄISCHE PATENTSCHRIFT

(11) **EP 1 957 912 B1**
(45) Veröffentlichungstag und Bekanntmachung des Hinweises auf die Patenterteilung: **12.10.2011**
(21) Anmeldenummer: 06807342.8
(22) Anmeldetag: 17.10.2006
(51) Int. Cl.: F25D 23/12

(54) **EISBEREITER UND DAMIT AUSGESTATTETES HAUSHALTSGERÄT**
ICE MAKER AND DOMESTIC APPLIANCE WHICH IS EQUIPPED WITH SAID ICE MAKER
PREPARATEUR DE GLACE ET APPAREIL ELECTROMENAGE EQUIPE DE CE DERNIER

(30) Priorität: 30.11.2005 DE 102005057139
(43) Veröffentlichungstag der Anmeldung: 20.08.2008
(73) Patentinhaber: BSH Bosch und Siemens Hausgeräte GmbH, 81739 München (DE)
(72) Erfinder: Hausmann, Georg, 89407 Dillingen (DE); Nalbach, Peter, 73230 Kirchheim/Nabern (DE)
(86) Internationale Anmeldenummer: PCT/EP2006/067496
(87) Internationale Veröffentlichungsnummer: WO 2007/062908

(56) Entgegenhaltungen:
- EP-A- 1 734 319
- US-A1- 2001 023 843
- US-A1- 2002 189 983
- US-B2- 6 355 177

## Beschreibung

Die vorliegende Erfindung betrifft einen Eisbereiter und ein Haushaltsgerät, insbesondere ein Kältegerät, das mit einem solchen Eisbereiter ausgestattet ist.

In vielen Ländern wird dem Leitungswasser Chlor zugesetzt, um eine Verkeimung zu verhindern, oder das Leitungswasser hat aus anderen Gründen einen vom Verbraucher als unangenehm empfundenen Geschmack. In solchen Ländern wird meist das zur Bereitung von Eiswürfeln für Getränke oder in anderer Weise für den unmittelbaren menschlichen Genuss vorgesehene Wasser gefiltert, z. B. mit Hilfe eines Aktivkohlefilters, um das Chlor oder allgemein die Trägerstoffe des unerwünschten Geschmacks oder Geruchs zu beseitigen. Derartige Filter haben eine begrenzte Lebensdauer; ist diese überschritten, so ist eine Beseitigung der unerwünschten Stoffe nicht mehr gewährleistet, und anstatt Keime abzufangen, kann der Filter selber zum Nährboden für Keime werden. Es ist daher sowohl für den Komfort als auch für die Gesundheit der Verbraucher wichtig, dass die Lebensdauer der Filter überwacht und dafür gesorgt wird, dass diese, wenn nötig, ausgetauscht werden.

Kältegeräte, bei denen einem eingebauten Eisbereiter oder einer Zapfstelle für gekühltes Wasser ein Wasserfilter vorgeschaltet ist, sind z. B. aus US 6 355 177 B2 und US 6 375 834 B1 bekannt. Bei diesen bekannten Geräten ist auch eine Überwachung des Abnutzungsgrads des Filters vorgesehen. US 6 355 177 B2 schlägt vor, basierend auf einer bekannten Durchflussrate eines in einer Versorgungsleitung von Eisbereiter und Zapfstelle angeordneten Ventils die kumulierte Zeit zu erfassen, die dieses Ventil offen steht. Diese kumulierte Zeit wird mit der Durchflussrate des Ventils multipliziert, um einen kumulierten Durchsatz des Filters zu erhalten, und dieser wird mit einem spezifizierten Durchsatz verglichen, um abzuschätzen, ob der Filter abgenutzt ist oder nicht. Diese Verarbeitung erfordert eine exakte Zeitmessung und eine Vielzahl von Multiplikationen, um den Abnutzungsgrad des Filters zu beurteilen.

Bei dem aus US 6 613 236 B1 bekannten Kältegerät durchläuft ein Prozessor eine Endlosschleife, in der regelmäßig geprüft wird, ob ein Versorgungsventil in einer Wasserzufuhrleitung offen ist oder nicht. Wenn das Ventil offen ist, wird ein Wasserzähler um einen Wert inkrementiert, der dem Wasserdurchsatz des Ventils zwischen zwei Wiederholungen der Endlosschleife entspricht. Auch dieses System geht davon aus, dass die Durchflussrate des offenen Ventils im wesentlichen konstant ist, und auch die Dauer einer Schleife des Programms muss im wesentlichen konstant sein. Ein Mikroprozessor, der das Programm ausführt, muss es daher ständig oder zumindest mit hoher Priorität gegenüber anderen auszuführenden Programmen ausführen, um einen gleichbleibenden Zeitabstand zwischen zwei Wiederholungen zu gewährleisten. Die Überwachung des Filters belastet daher die Verarbeitungskapazität des Mikroprozessors erheblich.

Ein Eisbereiter gemäss dem Oberbegriff von Anspruch 1 ist aus US2002/189983 bekannt. Aufgabe der vorliegenden Erfindung ist, einen Eisbereiter und ein damit ausgestattetes Haushaltskältegerät zu schaffen, bei denen die Überwachung des Abnutzungsgrades eines dem Eisbereiter vorgeschalteten Wasserfilters die Verarbeitungskapazität einer dafür eingesetzten Überwachungseinheit nur wenig belastet.

Die Aufgabe wird zum einen gelöst durch einen Eisbereiter mit einer Eisschale, einer Wasserzufuhrleitung, über die die Eisschale mit Wasser befüllbar ist, einem austauschbar in der Wasserzufuhrleitung angeordneten Wasserfilter und einer Überwachungseinheit zum Berechnen eines für den Abnutzungsgrad des Filters repräsentativen Werts, die Mittel zum Ändern des repräsentativen Werts um eine erste feste Schrittweite bei jeder Befüllung der Eisschale aufweist.. Da die Wassermenge, die die Eisschale eines Eisbereiters fasst, stets die gleiche ist, genügt es, lediglich die Zahl der Befüllungen der Eisschale zu erfassen, um so ein Maß für den kumulierten Wasserdurchsatz eines vorgeschalteten Filters und damit für dessen Abnutzungsgrad zu erhalten.

Der Eisschale kann ein Füllstandsmesser zugeordnet sein, der jeweils bei Erreichen eines vorgegebenen Füllstandes der Eisschale das Schließen eines in der Wasserzufuhrleitung angeordneten Ventils veranlasst. So ist sicher gestellt, dass bei jedem Befüllen der Eisschale, unabhängig von eventuellen Druckschwankungen in der Wasserzufuhrleitung oder anderen Unwägbarkeiten, der Eisschale eine feste Wassermenge zugeführt wird.

Alternativ kann einem in der Wasserleitung angeordneten Ventil ein Zeitgeber zugeordnet sein, der das Ventil jeweils nach einer vorgegebenen Zeitspanne des Offenstehens wieder schließt. Diese Zeitspanne ist in Abhängigkeit von der Durchflussrate des Ventils so festgelegt, dass die in der Zeitspanne durch das Ventil geflossenen Wassermenge dem Fassungsvermögen der Eisschale entspricht und von Mal zu Mal im wesentlichen gleich bleibt.

Die Aufgabe wird des weiteren gelöst durch ein Haushaltskältegerät, das einen Eisbereiter wie oben beschrieben aufweist.

Ein solches Haushaltskältegerät kann ferner eine ebenfalls über den Filter versorgte Wasserzapfstelle aufweisen. In diesem Fall kann die Überwachungseinheit Mittel aufweisen, die den repräsentativen Wert, solange ein Ventil der Zapfstelle offen ist, in festen Zeitabständen um eine zweite feste Schrittweite ändern.

Diese zweite feste Schrittweite ist vorzugsweise kleiner als die erste, um auch abgezapfte Wassermengen, die kleiner sind als die Füllmenge der Eisschale, erfassen zu können.

Vorzugsweise ist der Zeitabstand zwischen zwei Änderungen des repräsentativen Werts um die zweite Schrittweite bei geöffnetem Ventil etwa zweimal so groß wie der Zeitabstand zwischen dem Öffnen des Ventils und der ersten darauf folgenden Änderung um die zweite Schrittweite. Wenn beim Öffnen des Ventils der Zapfstelle sofort um die zweite Schrittweite geändert würde, so entspräche dies einer sofortigen Erhöhung der von dem repräsentativen Wert repräsentierten Wassermenge bereits zum Zeitpunkt des Öffnens des Ventils, unabhängig davon, ob diese Wassermenge anschließend tatsächlich abgezapft wird oder nicht. Der in dieser Weise erhaltene repräsentative Wert wäre systematisch zu groß. Wenn umgekehrt vom Öffnen des Ventils bis zur ersten Änderung des repräsentativen Werts um die zweite Schrittweite die gleiche Zeitspanne verstreichen müsste wie zwischen zwei aufeinander folgenden Änderungen, so wäre der erfasste kumulierte Wasserdurchsatz systematisch zu niedrig. Wenn man annimmt, dass die gezapften Wassermengen statistisch gleichmäßig verteilt sind, dann ergibt sich eine korrekte Abschätzung des Gesamtwasserdurchsatzes, wenn der Zeitabstand zwischen dem Öffnen des Ventils und der ersten Änderung des repräsentativen Werts halb so groß ist wie der zwischen zwei aufeinanderfolgenden Änderungen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Eisbereiters gemäß einer ersten Ausgestaltung der Erfindung;
- Fig. 2: eine schematische Darstellung einer kombinierten Anordnung von Wasserzapfstelle und Eisbereiter.

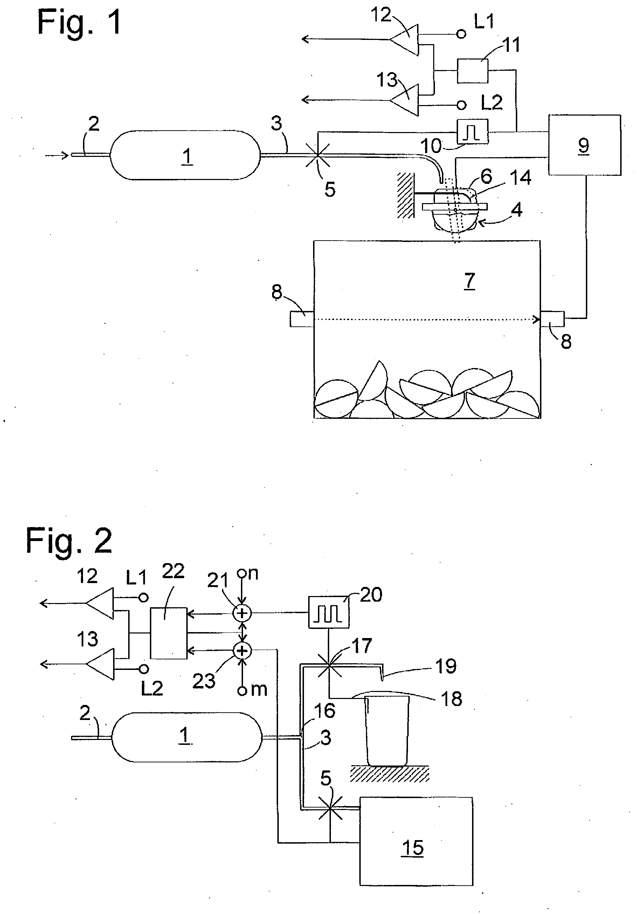

Fig. 1 ist eine schematische Darstellung eines in einem Kühlschrank eingebauten Eisbereiters. Ein austauschbarer Wasserfilter 1 ist in einem Sockelbereich des Kühlschranks untergebracht. Ein Eingangsanschluss des Filters 1 ist über eine Leitung 2 an einer Gebäudewässerleitung angeschlossen. Eine Leitung 3 führt von einem Ausgangsanschluss des Wasserfilters 1 zu einer Eisschale 4. In der Leitung 3 ist ein Ventil 5 dargestellt. Alternativ könnte dieses Ventil auch in der Leitung 2 angeordnet sein, damit es im geschlossenen Zustand den Wasserfilter 1 vom Druck der Gebäudewasserleitung abschirmen kann.

Die Eisschale 4 hat die Gestalt eines Zylindersegments, dessen Längsachse sich quer zur Zeichnungsebene der Fig. 1 erstreckt und das durch quer zur Längsachse orientierte Trennwände in eine Vielzahl von Fächern unterteilt ist. Die Eisschale 4 ist mit Hilfe eines Motors 6 um die Längsachse drehbar. Die in der Fig. mit durchgezogene Linien dargestellte Stellung der Eisschale 4 ist eine Gefrierstellung, in der die Trennwände über den Wasserspiegel in den Fächern der Eisschale hinausragen, so dass voneinander getrennte Eisstücke erhalten werden. Die Schale kann ferner zeitweilig eine leicht gekippte Ausgleichsstellung einnehmen, in welcher eingefülltes Wasser die Trennwände auf einem Teil ihrer Breite überspült, so dass ein Ausgleich des Wasserstandes zwischen den Fächern möglich ist. In einer in der Fig. als gestrichelter Umriss gezeigten, stark gekippten Stellung werden die fertigen Eisstücke durch über der Schale 4 angebrachte Finger 14 aus der Schale 4 herausgestoßen und fallen in einen darunter liegenden Vorratsbehälter 7, wo sie von einem Benutzer nach Bedarf entnommen werden können.

Am Vorratsbehälter 7 ist eine Lichtschranke 8 oder ein ähnlicher Typ von Füllstandssensor angeordnet, der dazu dient, einen unzureichenden Füllstand des Vorratsbehälters 7 einer Steuerschaltung 9 zu signalisieren. Wenn dies geschieht, gibt die Steuerschaltung 9 einen Impuls an eine monostabile Kippstufe 10 und einen Zähler 11 aus. Die Kippstufe 10 liefert darauf hin einen Impuls einer festen, herstellerseitig eingestellten Dauer an das Ventil 5. Solange der Impuls anliegt, ist das Ventil 5 offen, und Wasser fließt durch den Filter 1 und die Leitung 3 in die Eisschale 4. Die Dauer des Ausgangsimpulses der Kippstufe 10 ist in Abhängigkeit von einer spezifizierten Durchflussrate des Ventils 5 so bemessen, dass eine zum Füllen der Fächer der Eisschale 4 ausreichende Wassermenge zudosiert wird.

Nach dem Befüllen der Eisschale 4 dreht die Steuerschaltung 9 die Eisschale 4 zunächst kurzzeitig in die Ausgleichsstellung und dann zurück in die gezeigte Stellung. In dieser bleibt die Eisschale 4 für eine an der Steuerschaltung 9 voreingestellte, zum Gefrieren des Wassers in der Schale 4 ausreichende Zeit. Anschließend werden die fertigen Eisstücke ausgeworfen, und wenn die Lichtschranke 8 weiterhin einen unzureichenden Füllstand signalisiert, wiederholt sich der Vorgang.

Der Zähler 11 wird durch jeden von der Steuerschaltung 9 ausgegebenen Impuls um eine feste Schrittweite inkrementiert. In dem hier betrachteten Fall eines Kühlschranks, der nur einen Eisbereiter, aber keine Zapfstelle für gekühltes Wasser aufweist, kann die Schrittweite gleich eins sein. Dann bezeichnet der Inhalt des Zählers 11 die Zahl der Male, die die Eisschale 4 bereits befüllt worden ist. Da die Einfüllmenge der Eisschale 4 stets die gleiche ist, ist dieser Zählwert ein direktes Maß für den Gesamtdurchsatz des Filters 1. Komparatoren 12, 13 sind an den Ausgang des Zählers 11 angeschlossen, um den Zählwert mit zwei Grenzwerten L1, L2 zu vergleichen. Überschreitet der Zählwert den kleineren der zwei Grenzwerte, L1, so liefert der Komparator 12 ein Ausgangssignal, das eine nicht dargestellte Anzeige am Gehäuse des Kühlschranks aktiviert, um einen Benutzer davon in Kenntnis zu setzen, dass die Kapazität des Wasserfilters 1 nahezu erschöpft ist und dass ein Ersatz für den Filter beschafft werden sollte. Überschreitet der Zählwert auch den größeren Grenzwert L2, so liefert der Komparator 13 ein zweites Signal, das am Gehäuse des Kühlschranks angezeigt wird, um den Benutzer davon in Kenntnis zu setzen, dass die Kapazität des Filters erschöpft ist.

Fig. 2 ist eine schematische Darstellung eines Eisbereiters und einer Zapfstelle für gekühltes Trinkwasser in einem erfindungsgemäßen Haushaltskältegerät. Der Eisbereiter hat die gleichen Komponenten 4, 6 bis 10, wie oben bei Bezug auf Fig. 1 beschrieben; sie sind in Fig. 2 als ein Block 15 zusammengefasst. In der Leitung 3 ist zwischen dem Wasserfilter 1 und dem Ventil 5 des Eisbereiters eine Verzweigung 16 gebildet, die über ein zweites Ventil 17 eine Zapfstelle 19 versorgt. Das Ventil 17 ist in an sich bekannter Weise durch einen Hebel 18 gesteuert, der durch Platzieren eines Bechers oder dergleichen an der Zapfstelle 19 betätigt wird. Durch Öffnen des Ventils 17 wird ein Oszillator 20 in Gang gesetzt, der ein Rechtecksignal liefert, in welchem sich niedrige und hohe Signalpegel jeweils mit gleicher Dauert abwechseln.

Für die Zwecke der vorliegenden Beschreibung wird angenommen, dass der Oszillator 20 nach Ingangsetzen durch das Ventil 17 zunächst einen niedrigen Pegel mit der Dauer t liefert. Diese Festlegung ist jedoch rein willkürlich; die nachfolgend beschriebene Funktionsweise des dargestellten Systems ist selbstverständlich in gleichwertiger Weise auch realisierbar, wenn der Oszillator 20 zunächst einen hohen Signalpegel liefert.

Eine ansteigende Flanke des Signals vom Oszillator 20, in einem Zeitabstand t nach dem Öffnen des Ventils 17, triggert einen Addierer 21, an dessen zwei Dateneingängen ein fester ganzzahliger Wert n bzw. der aktuelle Inhalt eines Registers 22 anliegen. Der Ausgang des Addieres 21 ist an einen Eingang des Registers 22 angeschlossen, um den um n inkrementierten Registerinhalt in das Register 22 zurückzuschreiben.

Der Addierer 21 wird durch jede weitere ansteigende Flanke des Oszillatorsignals getriggert, so dass das Register jeweils zu Zeiten t, 3t, 5t, etc. inkrementiert wird, solange das Ventil 17 offen ist.

Ein zweiter Addierer 23 empfängt ein Triggersignal vom Eisbereiter-Block 15, das, wie in der Fig. gezeigt, dasselbe Signal sein kann, welches auch das Ventil 5 steuert, das aber auch das Eingangssignal der Kippstufe 10 sein könnte. Die Eingänge des Addierers 23 sind mit dem Inhalt des Registers 22 bzw. einem festen Wert m beschaltet; der Ausgang des Addierers 23 ist wiederum an einen Eingang des Registers 22 angeschlossen, um den um m inkrementierten Registerinhalt in das Register 22 zurückzuschreiben.

Der Inhalt des Registers 22 ist wie der des Zählers 11 in Fig. 1 ein Maß für den kumulierten Wasserdurchsatz des Filters 1 und wird in gleicher Weise, wie mit Bezug auf Fig. 1 beschrieben, von Komparatoren 12, 13 weiter verarbeitet.

Das Verhältnis der Inkrementwerte n/m ist entsprechend dem Verhältnis des Wasserdurchsatzes des Ventils 17 in der Zeitspanne 2t zur Füllmenge des Eisschale 4 gewählt. Wenn z. B. die Füllmengen der Eisschale 0,2 I beträgt und m=5 ist, so entspricht jede Erhöhung des Registerinhalts 22 um 1 einem Wasserdurchsatz des Filters 1 von 40 cm³. Bei einer exemplarisch angenommenen Durchflussrate des Ventils 17 von 240 cm3/Minute müsste folglich, wenn das Ventil 17 offen ist, das Register 22 mit einer Geschwindigkeit von 6/Minute inkrementiert werden. D.h., es kann z. B. n=1 und t=5 Sekunden gesetzt werden.

Die mit Bezug auf Fig. 1 und 2 als diskrete Schaltungsteile beschriebenen. Elemente wie etwa Register, Addierer, Zähler, Komparatoren etc. können selbstverständlich auch durch eine programmgesteuerte Schaltung realisiert sein. Eine solche programmgesteuerte Schaltung würde nur in Zeiten, wo ein Ventil 5 oder 17 offen ist, tatsächlich zur Überwachung des Wasserdurchsatzes durch das Filter 1 benötigt; während des bei weitem überwiegenden Teils der Betriebszeit des Kältegeräts kann sie für andere Aufgaben ohne Einschränkung zur Verfügung stehen.

## Patentansprüche

1. Eisbereiter mit einer Eisschale (4), einer Wasserzufuhrleitung (2, 3), über die die Eisschale (4) mit Wasser befüllbar ist, einem austauschbar in der Wasserzufuhrleitung (2, 3) angeordneten Wasserfilter (1) und einer Überwachungseinheit (9-13) zum Berechnen eines für den Abnutzungsgrad des Filters (1) repräsentativen Werts, **dadurch gekennzeichnet, dass** die Überwachungseinheit (9-13) Mittel (11; 22, 23) zum Ändern des repräsentativen Werts um eine erste feste Schrittweite (m) bei jeder Befüllung der Eisschale (4) aufweist.

2. Eisbereiter nach Anspruch 1, **dadurch gekennzeichnet, dass** der Eisschale ein Füllstandsmesser zugeordnet ist.

3. Eisbereiter nach Anspruch 1, **dadurch gekennzeichnet, dass** einem in der Wasserleitung (3) angeordneten Ventil (5) ein Zeitgeber (10) zum Schließen des Ventils (5) nach einer vorgegebenen Zeitspanne des Offenstehens zugeordnet ist.

4. Haushaltskältegerät, **gekennzeichnet durch** einen Eisbereiter nach einem der vorhergehenden Ansprüche.

5. Haushaltskältegerät nach Anspruch 4, **dadurch gekennzeichnet, dass** es ferner eine über das Filter (1) versorgte Wasserzapfstelle (19) aufweist, und dass die Überwachungseinheit Mittel (21, 22) zum Ändern des repräsentativen Werts um eine zweite feste Schrittweite (n) in festen Zeitabständen (2t), solange ein Ventil (17) der Zapfstelle (19) offen ist, aufweist.

6. Haushaltsgerät nach Anspruch 5, **dadurch gekennzeichnet, dass** die zweite feste Schrittweite-(n) kleiner als die erste (m) ist.

7. Haushaltsgerät nach Anspruch 5 oder 6, **dadurch gekennzeichnet, dass** der Zeitabstand (2t) zwischen zwei Änderungen des repräsentativen Werts um die zweite Schrittweite (n) bei geöffnetem Ventil (17) etwa zweimal so groß ist wie der Zeitabstand (t) zwischen dem Öffnen des Ventils (17) und der ersten darauf folgenden Änderung um die zweite Schrittweite (n).

## Claims

1. Ice maker with an ice bowl (4), a water feed duct (2, 3), by way of which the ice bowl (4) is fillable with water, a water filter (1) exchangeably arranged in the water feed duct (2, 3) and a monitoring unit (9-13) for computing a value representative of the degree of exhaustion of the filter (1), **characterised in that** the monitoring unit (9-13) comprises means (11; 22, 23) for changing the representative value by a first fixed step size (m) in the case of each filling of the ice bowl (4).

2. Ice maker according to claim 1, **characterised in that** a filling state meter is associated with the ice bowl.

3. Ice maker according to claim 1, **characterised in that** associated with a valve (5), which is arranged in the water duct (3), is a time transmitter (10) for closing the valve (5) after a predetermined period of time of staying open.

4. Domestic refrigerating appliance, **characterised by** an ice maker according to any one of the preceding claims.

5. Domestic refrigerating appliance according to claim 4, **characterised in that** it further comprises a water tap point (19) supplied by way of the filter (1) and that the monitoring unit comprises means (21, 22) for changing the representative value by a second fixed step size (n) at fixed time intervals (2t) as long as a valve (17) of the tap point (19) is open.

6. Domestic appliance according to claim 5, **characterised in that** the second fixed step size (n) is smaller than the first (m).

7. Domestic appliance according to claim 5 or 6, **characterised in that** the time interval (2t) between two changes of the representative value by the second step size (n) when the valve (17) is open in approximately twice as large as the time interval (t) between the opening of the valve (17) and the first change following thereupon by the second step size (n).

## Revendications

1. Préparateur de glace comprenant un bac à glace (4), une conduite d'arrivée d'eau (2, 3), par l'intermédiaire de laquelle le bac à glace (4) peut être rempli d'eau, un filtre à eau (1) disposé de manière interchangeable dans la conduite d'arrivée d'eau (2, 3) et une unité de contrôle (9-13) pour calculer une valeur représentative pour le degré d'usure du filtre (1), **caractérisé en ce que** l'unité de contrôle (9-13) présente des moyens (11 ; 22, 23) pour modifier la valeur représentative d'un premier pas de progression fixe (m) à chaque remplissage du bac à glace (4).

2. Préparateur de glace selon la revendication 1, **caractérisé en ce qu'**un mesureur de niveau est attribué au bac à glace.

3. Préparateur de glace selon la revendication 1, **caractérisé en ce qu'**une horloge (10) est attribuée à une vanne (5) disposée dans la conduite d'eau (3) pour fermer la vanne (5) après une période de temps prédéfinie d'ouverture.

4. Appareil ménager frigorifique **caractérisé par** un préparateur de glace selon l'une quelconque des revendications précédentes.

5. Appareil ménager frigorifique selon la revendication 4, **caractérisé en ce qu'**il présente en outre un point de prélèvement d'eau (19) alimenté par l'intermédiaire du filtre (1), et **en ce que** l'unité de contrôle présente des moyens (21, 22) pour modifier la valeur représentative d'un second pas de progression fixe (n) à intervalles de temps fixes (2t) tant qu'une vanne (17) du point de prélèvement (19) est ouverte.

6. Appareil ménager selon la revendication 5, **caractérisé en ce que** le second pas de progression (n) est plus petit que le premier (m).

7. Appareil ménager selon la revendication 5 ou 6, **caractérisé en ce que** l'écart de temps (2t) entre deux modifications de la valeur représentative du second pas de progression (n) lorsque la vanne (17) est ouverte est environ deux fois aussi important que l'écart de temps (t) entre l'ouverture de la vanne (17) et la première modification consécutive du second pas de progression (n).
